# EUROPÄISCHE PATENTANMELDUNG

(11) **EP 1 093 072 A1**
(43) Veröffentlichungstag der Anmeldung: **18.04.2001**
(21) Anmeldenummer: 99120597.2
(22) Anmeldetag: 16.10.1999
(51) Int. Cl.: G06F 17/60

(54) **Verfahren zur abfragbaren Archivierung von Einzelposten einer Sammeltransaktion**

(71) Anmelder: Brockmans, Rolf-Georg, 47877 Willich (DE)
(72) Erfinder: Brockmans, Rolf-Georg, 47877 Willich (DE)
(74) Vertreter: Stenger, Watzke & Ring Patentanwälte

(57) **Zusammenfassung**

Um ein Verfahren bereitzustellen, welches die Nachprüfung von Einzeltransfervorgängen im Rahmen kumulierter Transaktionen auf einfache, aber insbesondere auch auf sichere Weise ermöglicht, wird mit der Erfindung vorgeschlagen ein Verfahren zur abfragbaren Archivierung von Einzelposten einer in einem Transaktionsdatensatz erfaßten, kumulierten Transaktion, wobei der Transaktion ein Codeziffernblock und jedem Einzelposten aus der Transaktion eine Codeziffer aus dem Codeziffernblock zugeordnet werden, die Codeziffer und die Einzelposteninformation unabhängig vom Transkaktionsdatensatz abrufbar gespeichert und eine Codeziffernblock-ldentifikation dem Transaktionsdatensatz angehängt wird.

## Beschreibung

Die vorliegende Erfindung betrifft ein Verfahren zur abfragbaren Archivierung von Einzelposteninformationen einer in einem Transaktionsdatensatz erfaßten kumulierten Transaktion.

Es ist bekannt, daß im bargeldlosen Zahlungsverkehr Transaktionen eine Vielzahl von Einzelposten kumulieren. Insbesondere im nationalen und internationalen Transaktionsverkehr zwischen Banken ist es geläufig, daß riesige Summen mit Einzeltransaktionen übertragen werden. Diese Summen setzen sich zusammen aus der Kumulation einer Vielzahl kleinerer Einzelaufträge. Solche Transaktionen sind in einem Transaktionsdatensatz identifiziert, also der Information aus Gesamtsumme und Empfänger, ggf. auch Absender und dergleichen. Man kann jedoch der Gesamttransaktion nicht mehr den dazu gehörigen Einzelposten entnehmen. Derartige Informationen liegen nirgends vor und sind im Prinzip nirgends gespeichert. Soll zu irgendeinem Zeitpunkt ermittelt werden, ob eine kumulierte Transaktion bestimmte Einzelposten umfaßte, so ist dies zum gegenwärtigen Zeitpunkt nicht möglich. Insbesondere zur Absicherung gegen Geldwäschevorgänge und dergleichen ist es wünschenswert, Einzelvorgangsinformationen über kumulierte Transaktionen auswerten zu können.

Ausgehend vom vorbekannten Stand der Technik, liegt der Erfindung die **Aufgabe** zugrunde, ein Verfahren bereitzustellen, welches die Nachprüfung von Einzeltransfervorgängen im Rahmen kumulierter Transaktionen auf einfache, aber insbesondere auch auf sichere Weise ermöglicht.

Zur technischen **Lösung** dieser Aufgabe wird mit der Erfindung vorgeschlagen ein Verfahren zur abfragbaren Archivierung von Einzelposten einer in einem Transaktionsdatensatz erfaßten, kumulierten Transaktion, wobei der Transaktion ein Codeziffernblock und jedem Einzelposten aus der Transaktion eine Codeziffer aus dem Codeziffernblock zugeordnet werden, die Codeziffer und die Einzelposteninformation unabhängig vom Transkaktionsdatensatz abrufbar gespeichert und eine Codeziffernblock-Identifikation dem Transaktionsdatensatz angehängt wird.

Das erfindungsgemäße Verfahren besteht darin, daß jeder Einzeltransaktion eine Codeziffer zugeordnet wird. In einer Zentrale kann die Codeziffer und die dazugehörige Einzeltransaktion gespeichert werden. Die Codeziffern einer kumulierten Transaktion werden dem Transaktionsdatensatz bzw. den für die kumulierte Transaktion notwendigen Übermittlungsdaten angehängt. Somit ist es nicht möglich, anhand der kumulierten Transaktion Einzelvorgänge zu erkennen, so daß keine Informationen an unautorisierte Personen gelangen können. Anhand der der kumulierten Transaktionen anhängenden Codeziffern kann jedoch aus der Zentraldatenbank ein Rückschluß auf den einzelnen in der kumulierten Transaktion enthaltenen Vorgang gezogen werden.

Mit der Erfindung wird vorgeschlagen, daß die Codeziffern einer kumulierten Transaktion einen Ziffernblock bilden, so daß dem Transaktionsdatensatz nur die erste und die letzte Codeziffer angehängt werden müssen. Die Codeziffern selbst sind mehrstellige Zahlenfolgen und in willkürlicher Weise generiert. In der Zentraldatenbank wird der Codeziffernblock mit den Einzelvorgangsinformationen gespeichert und somit kann über die Codeziffernblockinformation jede einzelne Codeziffer und somit jeder einzelne in der kumulierten Transaktion enthaltene Vorgang rückverfolgt werden.

In vorteilhafter Weise wird mit der Erfindung vorgeschlagen, daß ein Codeziffernblock gebildet wird durch eine einzige Codeziffer, die an vorgegebenen Stellen Platzhalter für eine laufende Numerierung aufweist. So können beispielsweise 4 zusätzliche Stellen einer Zahlenfolge die laufenden Nummern von 0001 bis 9999 darstellen und sämtlich einer einzelnen aus einer mehrstelligen Zahlenfolge bestehenden Codeziffer angehängt sein. In einem solchen Fall müssen dem Transaktionsdatensatz nur die Codeziffer und die erste und die letzte laufende Nummer angehängt werden.

Mit der Erfindung wird weiterhin vorgeschlagen, daß die Codeziffern und die Einzelposteninformationen in einer Zentraldatenbank abgelegt werden. Vorzugsweise erfolgt die Speicherung abfragegesichert, d. h., nur autorisierte Personen können Informationen in bezug auf den jeweiligen Codeziffernblock abfragen. Zu diesem Zweck kann in erfindungsgemäßer Weise vorgesehen sein, daß der Codeziffernblock zusammen mit einer zusätzlichen Abfrage-Sicherungs-Codierung ausgegeben wird, so daß nur Personen, die den Codeziffern und die zusätzliche Codierung kennen, Einzelpostenabfragen durchführen können.

Weiterhin wird mit der Erfindung in vorteilhafter Weise vorgeschlagen, daß sämtliche Informationen verschlüsselt gespeichert werden, um einen unberechtigten Einzelzugriff zu verhindern.

Das erfindungsgemäße Verfahren stellt eine einfache technische Lösung für das Problem dar, ansonsten verlorengegangene Daten bei der Zusammenfassung von Einzelvorgängen zu einer Gesamttransaktion rückverfolgbar abzulegen, ohne dabei die Sicherheit zu beeinträchtigen.

## Patentansprüche

1. Verfahren zur abfragbaren Archivierung von Einzelposten einer in einem Transaktionsdatensatz erfaßten, kumulierten Transaktion, wobei der Transaktion ein Codeziffernblock und jedem Einzelposten aus der Transaktion eine Codeziffer aus dem Codeziffernblock zugeordnet werden, die Codeziffer und die Einzelposteninformation unabhängig vom Transkaktionsdatensatz abrufbar gespeichert und eine Codeziffernblock-ldentifikation dem Transaktionsdatensatz angehängt wird.

2. Verfahren nach Anspruch 1, dadurch gekennzeichnet, daß die Codeziffern eine mehrstellige Ziffernfolge umfassen.

3. Verfahren nach einem der vorhergehenden Ansprüche, dadurch gekennzeichnet, daß der Codeziffernblock eine Codeziffer mit einer gegebenen Anzahl von Stellen für eine laufende Nummer umfaßt.

4. Verfahren nach einem der vorhergehenden Ansprüche, dadurch gekennzeichnet, daß die Codeziffernblock-ldentifikation die Codeziffer sowie die erste und letzte laufende Nummer umfaßt.

5. Verfahren nach einem der vorhergehenden Ansprüche, dadurch gekennzeichnet, daß die Codeziffern, gegebenenfalls mit der jeweiligen laufenden Nummer und die dazugehörigen Einzelposteninformation, in einer Zentraldatenbank gespeichert werden.

6. Verfahren nach Anspruch 5, dadurch gekennzeichnet, daß die Datenabfragen gesichert gespeichert werden.

7. Verfahren nach Anspruch 6, dadurch gekennzeichnet, daß die Abfragesicherung durch einen einer autorisierten Person mitgeteilten Zusatz zum Codeziffernblock gebildet wird.

8. Verfahren nach einem der vorhergehenden Ansprüche, dadurch gekennzeichnet, daß die Daten verschlüsselt gespeichert werden.
